# EUROPEAN PATENT APPLICATION

(11) **EP 2 441 413 A1**
(43) Date of publication of application: **18.04.2012**
(21) Application number: 10187927.8
(22) Date of filing: 18.10.2010
(51) Int. Cl.: A61C 9/00, B01F 7/00, B01F 13/00, B01F 15/00, B01F 15/02

(54) **A mixer for forming a dental material, a system comprising the mixer, and a method of mounting the mixer**

(71) Applicant: 3M Innovative Properties Company, Saint Paul, MN 55133-3427 (US)
(72) Inventor: The designation of the inventor has not yet been filed
(74) Representative: Hohmann, Arno

(57) **Abstract**

A mixer (120) for mixing components to form a dental material comprises a mixing rotor, first, second and third input connectors. Each of the first, second and third input connectors are adapted to form part of a plug-and-socket connection and are further adapted for plugging in a plugging direction to establish the plug-and-socket connection. The mixer (120) further comprises a guiding structure which is adapted to provide a guiding of the mixer along the plugging direction for establishing at least one of the plug-and-socket connections. The invention may help facilitating a placement of the mixer to a dental material dispensing device.

## Description

### Field of the Invention

The invention relates to a mixer for mixing components to form a dental material, and in particular to a mixer having a guiding structure which facilitates placing of the mixer to a device for dispensing a dental material.

### Background Art

A variety of dental materials are prepared from mixing individually provided components. There are dental mixing and dispensing devices which can automatically merge and mix the individual components to form a usable dental material therefrom. Such dental mixing and dispensing devices can also typically dispense such a dental material in suitable portions for use. Further these dental mixing and dispensing devices typically have a receptacle for receiving the components, and are typically adapted to continuously supply amounts of the components into a mixer. For dispensing an amount of a dental material the components are typically continuously supplied to mixer and mixed therein as the components flow through the mixer toward an outlet of the mixer. An exemplary device for mixing and dispensing a dental impression material is for example available under the designation 3M™ ESPE™ Pentamix™ from 3M ESPE AG, Germany.

The components in many cases are adapted to chemically react with one another to form a hardenable material when mixed. Therefore such components may harden in the mixer after a certain time after mixing the components, thus blocking the mixer. Therefore a mixer for use with a mixing and dispensing device is generally exchangeable by a new mixer and often provided as a disposable part. Dentists and their assistants may have to remove and replace mixers several times each day. Accordingly a fast and easy replacement of a mixer is generally desired.

An example of a mixing and dispensing device and a dynamic mixer is disclosed in WO 2007/106701. The device has a drive shaft for driving a mixer. The mixer is placeable on the drive shaft in two positions to facilitate placement of the mixer on the drive shaft. Although a variety of different mixers are on the market there is still a need for a mixer which is relatively inexpensive, which provides a mixed dental material at maximized mixing quality, and which can be easily placed to a device.

### Summary of the Invention

The invention is directed to a mixer for mixing components to form a dental material. The mixer comprises:
- a mixing rotor for mixing the components;
- first, second and third input connectors, each being adapted to form part of a plug-and-socket connection, preferably in that each of the first, second and third input connectors forms either a plug or a socket of such a plug-and-socket connection;
- the first input connector comprising an input drive coupling which enables driving of the mixing rotor;
- the second and third input connectors each comprising an inlet for at least one of the components into the mixer;
- the first, second and third input connectors each being adapted for plugging in a plugging direction to establish the plug-and-socket connection; and
- wherein the mixer further comprises a guiding structure which is adapted to provide a guiding of the mixer along the plugging direction for establishing at least one of the plug-and-socket connections.

The invention is advantageous in that it preferably facilitates placement of a mixer to a dental material dispensing device. In particular a user of such a device may save time for assembly of the mixer. Further the invention preferably helps ensuring correct assembly of the mixer at the device. Thus dental material may be reliably supplied from the device to the mixer a homogenously mixed. The invention may therefore be advantageous in that it helps maximizing the mixing quality of the dental material. Further the invention may provide for preventing poorly mixed material - which may have undesired properties resulting in the necessity of repeating a dental treatment - to be applied in a patient's mouth. Thus the present invention may contribute to maximize the comfort for a patient and to minimize costs in a dental practice.

In one embodiment the mixer is adapted such that the guiding structure allows guiding of the mixer along the plugging direction in a position (preferably between two spaced positions along the plugging direction) in which at least the plug-and-socket connections of the second and third input connectors are not established. Further the mixer may be adapted such that the guiding structure allows guiding of the mixer along the plugging direction in a position (preferably between two positions along the plugging direction) in which the plug-and-socket connections of the first, second and third input connectors are not established.

An established plug-and-socket connection preferably comprises connection of an input connector with an appropriate output connector. Preferably an established plug-and-socket connection allows guiding a component from the output connector toward the input connector and prevents leakage of the component between the input and output connectors.

In a further embodiment the input drive coupling of the first input connector is adapted to engage with an appropriate output drive coupling of a first output connector at a drive shaft of the device for mixing and dispensing.

In one embodiment each of the first, second and third input connectors are oriented at the mixer for plugging in one common plugging direction. For example the first, second and third input connectors each may extend parallel to the plugging direction at a generally uniform cross-section. The second and third input connectors may for example comprise a generally cylindrical plug or socket.

Further the first input connector may comprise a plug or socket having an input engagement structure which along a first plugging axis, oriented generally parallel to the plugging direction, extends with a non-circular cross-section (for example a hexagonal cross-section). Such a non-circular cross-section preferably enables an appropriate output engagement structure at the first output connector to be mated with the first input connector so that a torque about the plugging axis can be transmitted from the first output connector to the first input connector. Thus the first input connector may be driven by the first output connector for rotating about the first plugging axis. Plugging of the first input connector with an appropriate first output connector may therefore not only require axially aligning of the connectors relative to one another, but may also require the input and output engagement structures to be rotationally aligneded relative to one another about the plugging axis. This is because the non-circular cross-sections of the first input and output connectors may only properly mate at a certain rotational alignment of the structures about the plugging axis in which the cross-sections match with one another.

Further the second and third input connectors may extend along second and third plugging axes, respectively. The second and third plugging axes may be generally parallel to the plugging direction and may be generally parallel to the first plugging axis. The first, second, and third plugging axes are preferably spaced laterally relative to one another. The assembly of the mixer to the device typically requires aligning the first, second and third input connectors with first, second and third output connectors of the device, respectively. Typically the plug-and socket connection between the first, second and third input connectors and the first, second and third output connectors can be established at a certain rotational alignment of the mixer and the device relative to each other only, in which all input and output connectors are axially aligned with each other. However the rotational alignment in which the engagement structures match and the rotational alignment in which the connectors are aligned may not always correspond to each other. In fact, because the first input connector (preferably provided at the rotatable mixing rotor) and the first output connector (that may be provided at a rotatable drive shaft of the device) may be randomly rotationally oriented independent from each other, and these orientations may in many cases differ from each other. Therefore assembly of the mixer to a dental material dispensing device may require a first rotational alignment to align the engagement structures with one another and an additional second rotational alignment to align at least the second and third input and output connectors with one another. A mixer requiring all three input connectors to be connected with the three output connectors of a device therefore typically requires two rotational alignments for assembly. This is further referred to as "dual alignment" requirement for the purpose of this specification. The present invention preferably enables such a dual alignment.

In one embodiment the guiding structure comprises a protrusion from the mixer. The protrusion may for example extend in a dimension parallel to the plugging direction. For example the first, second and third input connectors and the guiding structure may extend in parallel. The protrusion may comprise a groove extending in a dimension generally parallel to the plugging direction. The groove may for example be generally U-shaped, V-shaped or may have any shape which allows guiding in a dimension the groove extends along.

In one embodiment the groove extends partially around one of the first, second, and third input connectors. For example the U-shaped groove may extend partially around one of the first, second, and third input connectors. The U-shape may for example have a generally circular section which center is generally concentric to the first, second or third plugging axis.

In a further embodiment the protrusion comprises three U-shaped grooves. Each of the protrusions may partially extend around one of the first, second, and third input connectors. Thus a UUU-shape may be provided. This may allow for relatively easy guiding of the mixer during placement of the mixer to the device because the guiding structure may provide for aligning the mixer in the second rotational alignment independent of (for example prior to) a plug-and-socket connection being established.

In one embodiment the protrusion is formed at an end (preferably a free end) of at least one plug or socket structure of at least one of the first, second and third input connectors. For example the guiding structure may form an appendix of the first, second and/or third input connector(s).

In a further embodiment the protrusion extends over a first length and the first, second and third input connections each extend over a second length, and the first length is greater than the second length. This may enable a placement of the guiding structure to an appropriate counter structure of the device without the need of placing the first second and third input connectors to the device. Therefore aligning of the input connectors may be facilitated by the guiding structure.

In one embodiment the protrusion is generally ring shaped. The ring shaped protrusion may surround at least two of the first, second, and third input connectors, but preferably all of the first, second, and third input connectors. A guiding structure having a ring shaped protrusion due to having a relatively large size may be easily positioned relative to the device. The ring shaped protrusion may have a generally circular cross-section having a center axis which is generally in line with the first plugging axis. Thus the ring shaped protrusion may allow for rotationally guiding the mixer at the device to align the mixer in the first rotational alignment. This may allow for axially and/or rotationally aligning the first input connector of the mixer with the first output connector of the device by use of the guiding structure and further using the guiding structure to rotationally align the mixer for aligning the second and third input connectors of the mixer to the second and third output connectors, respectively, of the device.

In a further embodiment the first, second and third input connectors and the guiding structure extend from a rear end of the mixer. The mixer may further have an outlet for the mixture at an opposite front end. Therefore components dispensed from the device may enter the mixer at a rear end, flow through the mixer, and exit the mixer at the front end. Thereby the mixing rotor may be rotated, thus agitating the components in a direction generally laterally of their flow direction which preferably causes the components to merge. Therefore a relatively homogeneous mixture of the components may be achieved.

In one embodiment the mixer has a generally linear bulge or web protruding from the mixer in a dimension generally laterally of the plugging axis. A user may use such a bulge or web to feel the orientation of the mixer. This may facilitate assembly of the mixer because the user may not need to look at the mixer to determine the appropriate orientation.

In a further aspect the invention relates to a system which comprises the mixer according the invention and a device for dispensing a dental material. The device comprises:
- a motor driven drive shaft for driving the mixing rotor of the mixer, the drive shaft having a first output connector;
- at least one container for holding at least one component of the dental material
- a second output connector for the at least one component; and
- a plunger for extruding the component from the container.

The device for dispensing the dental material may have a third output connector for a further component. Further the device for dispensing the dental material may have a counter structure. The counter structure and the guiding structure may be adapted for mating and guiding each other linearly in one dimension and providing a restraint against a movement relative to one another in one or both of the other dimensions.

The first, second and third output connectors of the device may be connectable or connected to the first, second and third input connectors of the mixer, respectively. The second and third output connectors may be provided at one container holding two components of the dental material or each of the second and third output connectors may be provided at an individual container holding one component. For example the container may be in the form of a dual cartridge. Further the container may be in the form of a single cartridge or foil bag.

In one embodiment the system is adapted such that the guiding structure of the mixer and the counter structure allow guiding of the mixer along the plugging direction in a position (preferably between two spaced positions along the plugging direction) in which at least the plug-and-socket connections of the second and third input connectors with the second and third output connectors are not established. Further the system may be adapted such that the guiding structure and the counter structure allow guiding of the mixer along the plugging direction in a position (preferably between two positions along the plugging direction) in which the plug-and-socket connections of the first, second and third input connectors with the first, second and third output connectors are not established.

In a further aspect the invention relates to a method of placing a mixer for mixing components to form a dental material to a device for dispensing the dental material.

In this method the mixer has:
o first, second, and third input connectors; and
o a guiding structure;

In this method the device has:
o first, second, and third output connectors;

In this method the input and output connectors are adapted to establish a plug-and-socket connection through plugging of the input and output connectors to one another in a plugging direction.

Further the method comprises the steps of:
o placing the mixer with the guiding structure on the device;
o moving the mixer in the plugging direction guided by the guiding structure with the plug-and-socket connection being not established; and
o further moving the mixer in the plugging direction, thereby establishing the plug-and-socket connection.

In one embodiment the method comprising, in a subsequent manner, the steps of:
- aligning the first input connector with the first out connector, and
- aligning the second and third input connectors with the second and third output connectors respectively.

Therefore the first input connector may be rotatably aligned with the first output connector independent from aligning the second and third input connectors with the second and third output connectors, respectively. The rotational alignment may for example comprise aligning non-circular shapes of the first input connector and the first output connector relative to one another such that the non-circular shapes match with one another.

The method preferably enables an easy and correct assembly of the mixer to the dental material dispensing device. In particular the dual alignment requirement for placing the mixer to the device may be separated in two subsequent easy to handle steps.

### Brief Description of the Figures

- Fig. 1: is a perspective view of a system comprising a mixer and a dispensing device according to an embodiment of the invention;
- Fig. 2: is a perspective view of a mixer according to one embodiment of the invention;
- Fig. 3: is a top view of the mixer of Fig. 2 placed on a dispensing device;
- Fig. 4: is a perspective view of a mixer according to another embodiment of the invention;
- Fig. 5: is a top view of the mixer of Fig. 4 placed incorrectly to a dispensing device;
- Fig. 6: is a top view of the mixer of Fig. 4 placed on a dispensing device;
- Fig. 7: is a perspective view of a mixer according to a further embodiment of the invention;
- Fig. 8: is a top view of the mixer of Fig. 7 placed incorrectly to a dispensing device;
- Fig. 9: is a top view of the mixer of Fig. 7 placed on a dispensing device;
- Fig. 10: is a perspective view of input connectors and a guiding structure of a mixer according to one embodiment of the invention next to output connectors of a dispensing device;
- Fig. 11: is a perspective view of the input connectors and the guiding structure of Fig. 10 placed to output connectors of a dispensing device; and
- Figs. 12a/b/c: are a cross-sectional views of a mixer according to one embodiment of the invention in different positions relative to output connectors of a dispensing device.

### Detailed Description of the Invention

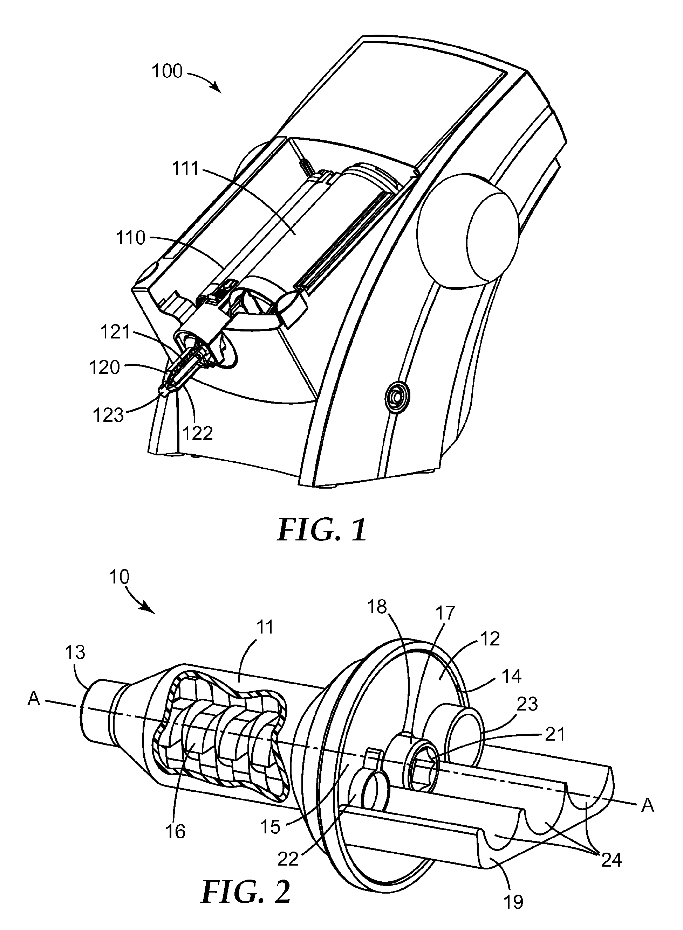

Fig. 1 shows a device 100 for mixing and dispensing dental materials. The device is motorized and therefore allows for automatic dispensation of the materials. The device 100 holds two components of the dental material in containers 110, 111. A mixer 120 for mixing the two components is attached to the device 100. The mixer 120 has a mixing chamber formed between a rotatable mixing rotor 121 and a mixer barrel 122. The mixer is connected with the containers 110, 111 such that the individual components can flow into the mixing chamber. The mixture can exit through an outlet 123 of the mixer 120. The device 100 is adapted to drive the mixing rotor 121 for mixing the components in the mixing chamber. The device 100 implements a continuous dynamic mixing process in which components can be continuously supplied into the mixing chamber and in which the mixture from the components can be dispensed continuously from the mixer. Thus the device allows preparation for variable amounts of dental materials without the need of predetermining amounts of initial components of the mixture. The components can be advanced toward the mixer 120 by a piston (not shown) of the device 100. Both the mixer and the piston can be driven by a motor, or individual motors, in the device 100.

The device shown may be used to mix and dispense a hardenable dental impression material, for example. The mixed material may be used to fill a dental tray which is then placed into a patient's mouth to take a dental impression. The mixer is attached replaceably at the device 100. Therefore when the mixed material hardens and thus blocks the mixer the used mixer may be replaced by an unused mixer for the next use of the device.

Fig. 2 shows a mixer 10 for mixing components to form a dental material. The mixer 10 comprises a housing 11 having a front opening 13. The front opening 13 forms an outlet for mixture prepared from the components within the mixer. In the example the housing 11 further has a rear opening 14 which is closed by a closure plate 15. The housing 11 and the closure plate 15 in combination form the mixing chamber of the mixer 10. The skilled person will however recognize that a mixing chamber can be provided by other configurations of the mixer. For example the housing may monolithically include the closure plate but may be provided as two half sections that are combined. Within the housing 11 a mixing rotor 16 for mixing the components is accommodated. The mixing rotor 16 is rotatable about a longitudinal axis A of the mixer 10. The longitudinal axis A preferably extends along a dimension through the front opening and the rear opening. Further the mixer 10 has a first input connector 21. The first input connector 21 comprises an input drive coupling by which the mixing rotor 16 can be driven. In the example the first input connector 21 is provided at a rear portion 17 of the mixing rotor 16. The rear portion 17 in the example extends through a first passageway 18 in the closure plate 15. The first input connector 21 comprises a socket. Therefore the first input connector 21 is adapted to form part of a plug-and-socket connection. The socket of the first input connector 21 extends in a dimension parallel to the longitudinal axis with a non-circular cross-section. In the example the non-circular cross-section is hexagonal. However any shape suitable for allowing for engaging the first input connector for transmitting a torque to the mixing rotor may be possible, for example any polygonal shape. The non-circular cross-section may also be formed by a generally cylindrical structure which has a groove or bar, for example.

The mixer 10 further has a second input connector 22 and a third input connector 23. The second and third input connectors 22, 23 each are adapted to form part of a plug-and-socket connection. In the example the second input connector 22 forms a plug, and the third input connector 23 forms a socket. The second and third input connectors 22, 23 each comprise an inlet for a component into the mixer. The inlets are formed by second and third passageways through the closure plate. The second and third input connectors 22, 23 extend in a dimension generally parallel to the longitudinal axis A with a generally circular cross-section. Therefore the first, second and third input connectors 21, 22, 23 can be plugged to corresponding plugs and/or sockets in a plugging direction parallel to the longitudinal axis A. The input connectors thus each are adapted for plugging in the plugging direction to establish the plug-and-socket connection. The skilled person will recognize that a socket may not be necessarily accommodated in a protruding structure as illustrated but may for example be flush with the closure plate.

The mixer 10 further comprises a guiding structure 19. The guiding structure 19 protrudes from the closure plate 15 and has a plurality of grooves 24 extending parallel to the longitudinal axis A (extending in the plugging direction). The guiding structure 19 may be placed with the grooves on corresponding counter-structures at the dispensing device and used to guide the mixer as it is moved for placing the mixer on the device. Thus the guiding structure 19 is adapted to provide a guiding of the mixer along the plugging direction for establishing at least one of the plug-and-socket connections.

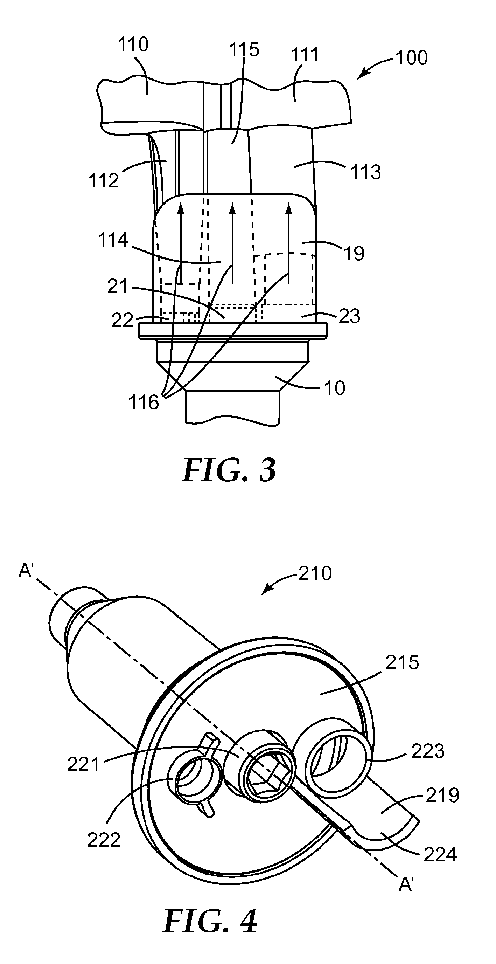

Fig. 3 shows the mixer 10 placed on a dispensing device 100 (not shown in detail) for dental material. The device 100 has a mixing shaft 115 which can be motor driven for driving a mixer placed onto the device. The mixing shaft has a first output connector 114 (not visible in this view). Further the device 100 has containers 110, 111 for holding components of the dental material. The containers 110, 111 comprise second and third output connectors 112, 113, respectively. In the situation shown the first, second and third input connectors 21, 22, 23 are connected with the first, second and third output connectors 114, 112, 113 respectively. Thus the first, second and third input connectors 21, 22, 23 and the first, second and third output connectors 114, 112, 113 form first, second, and third plug-and-socket connections which define a plugging direction as indicated by the arrows 116. In the example shown the guiding structure 19 is adapted for engaging with the first, second and third output connectors 114, 112, 113 of the device 100 in a first and a second position. In the first position of engagement the guiding structure engages with the first, second and third output connectors 114, 112, 113 of the device 100 with the first, second and third input connectors 21, 22, 23 being disconnected from the first, second and third output connectors 114, 112, 113. Further in the second position of engagement the guiding structure engages with the first, second and third output connectors 114, 112, 113 of the device 100 with the first, second and third input connectors 21, 22, 23 being connected with the first, second and third output connectors 114, 112, 113. Thus the mixer may be initially placed with the guiding structure to the device in the first position, and moved toward the second position under guidance of the guiding structure. Therefore assembly of the mixer to the device may be facilitated. As an advantage a user may save time for assembling the mixer, and further a correct connection of the mixer with the device may be ensured.

Fig. 4 shows a mixer 210 which has the same features as the mixer shown in Figs. 2 and 3 except for the guiding structure 219 being configured alternatively. The guiding structure 219 protrudes from a closure plate 215 of the mixer 210 and has a one generally U-shaped groove 224. The groove 224 extends parallel to a longitudinal axis A'. Again the mixer has first, second and third input connectors 221, 222, 223 which are adapted to form plug-and-socket connections with corresponding output connectors of a dental material dispensing device. Further first, second and third input connectors 221, 222, 223 are adapted for plugging in a plugging direction which is generally parallel to the longitudinal axis A'. The guiding structure 219 in this example may be smaller than the guiding structure shown in Figs. 2 and 3. Therefore the guiding structure 219 may be advantageous in that it enables a relatively good view to the first and second connectors and may only cover (block the view on) the third connector, for example during the mixer is placed on the dispensing device. The guiding structure 219 may further form a rotational stop. For example the mixer may be placed with the first input connector 221 on a drive shaft of a dispensing device with the second and third input connector being disconnected from any output connectors. In this position the mixer may be freely rotatable about the longitudinal axis A'. Therefore a user may rotate the mixer to a position in which the guiding structure 219 touches a counter-structure of the device. This is preferably a position in which the second and third input connectors 222, 223 are aligned with second and third output connectors (not shown) of the device. Thus in this position a movement of the mixer in the direction of the longitudinal axis A' toward the device may cause the second and third input connectors 222, 223 may connect with the second and third output connectors of the device. The skilled person will recognize that the guiding structure 219 may alternatively protrude from the third connector, for example may form an appendix to the third connector. Further the skilled person will know, that the guiding structure 219 (or a similar guiding structure) may be arranged at or adjacent the first or the second input connector. Further more than one guiding structure may be provided, for example two or three guiding structures each being arranged at or adjacent one input connector.

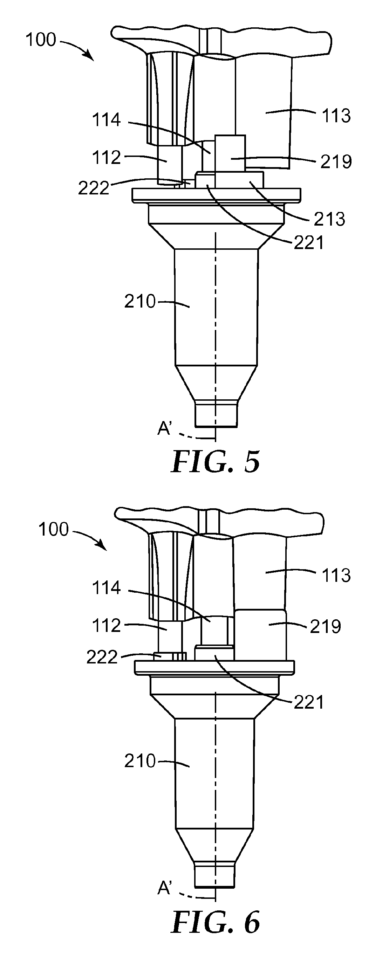

Fig. 5 shows the mixer 210 with the first input connector 221 connected with a first output connector 114 of a dental material dispensing device 100 (not shown in detail). In the situation shown the second and third input connectors 222, 223 are disconnected from the second and third output connectors 112, 113, respectively. Further the second and third input connectors 222, 223 are misaligned relative to the second and third output connectors 112, 113, respectively, but may be aligned relative to each other by rotating the mixer 210 about the longitudinal axis A'. Rotation of the mixer 210 with the first input connector 221 connected and the second and third input connectors 222, 223 disconnected is preferably enabled by the shape and arrangement of the guiding structure 219 and the configuration of the input and output connectors. In particular the guiding structure 219 is shaped and arranged at the mixer such that a rotation of the mixer within a certain angular range is possible with the guiding structure 219 forming a stop for a rotation outside the endpoints of that range. The mixer 210 may thus be placed on the device in a first position in which the guiding structure is disengaged from the output connectors of the device 100 with the first input connector 221 being connected to the first output connector 114, and with the second and third input connectors 222, 223 being disconnected from the second and third output connectors 112, 113 as shown in Fig. 5. The mixer may then be rotated toward a second position in which the guiding structure engages with the second or third output connectors 112/113 of the device 100 with the first input connector 221 being connected to the first output connector 114, and with the second and third input connectors 222, 223 being disconnected from the second and third output connectors 112, 113 (not shown).

Fig. 6 shows the mixer 210 placed in a third position in which the guiding structure 219 engages with the third output connector 213 of the device 100 with the first, second and third input connectors 221, 222, 223 being connected with the first, second and third output connectors 114, 112, 113. This may be achieved by moving the mixer from the second toward the third position with guidance of the guiding structure.

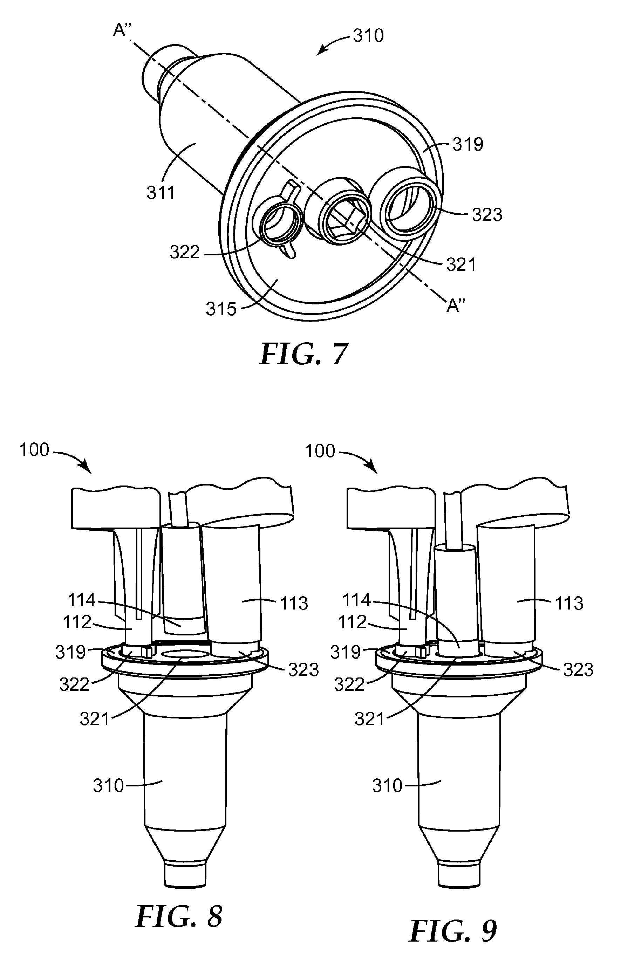

Fig. 7 shows a mixer 310 which has the same features as the mixers shown in Figs. 2, 3 and Figs. 4 - 6 except for the guiding structure 319 having an alternative configuration. In this example the guiding structure 319 protrudes from a closure plate 315 of the mixer 310, but may in another example protrude from or form an appendix to mixer housing 311. The guiding structure 319 is formed as a generally annular ring surrounding first, second and third input connectors 321, 322, 323 which are adapted to form plug-and-socket connections with corresponding output connectors of a dental material dispensing device.

The guiding structure 319 extends in a direction generally parallel to a longitudinal axis A". The first, second and third input connectors 321, 322, 323 are adapted for plugging in a plugging direction which is generally parallel to the longitudinal axis A". Because the guiding structure 319 is relatively large in dimension it may facilitate placing on the dispensing device.

Fig. 8 shows the mixer 310 placed next to a dental material dispensing device 100 (not shown in detail) but with the second and third input connectors 322, 323 misaligned relative to respective output connectors 112, 113 of the device 100. In the example shown the guiding structure 319 prevents a proper placement of the mixer on the device 100 in rotational positions of the mixer outside a rotational position in which the second and first input connectors 322, 323 are aligned with the second and third output connectors 112, 113 of the device 100. Thus the mixer 310 is adapted such that it can be placed on the device in a first position in which the first input connector 321 is connected with the first output connector 114 of the device, but with the second and third input connectors 322, 323 being disconnected and misaligned from the second and third output connectors 112, 113. Further the mixer 310 may be placed on the device in a second position in which the first input connector 321 is connected with the first output connector 114 of the device, with the second and third input connectors 322, 323 being disconnected from but aligned with the second and third output connectors 112, 113. And further the mixer 310 may be placed on the device in a third position in which the first, second and third input connectors 321, 322, 323 are connected with the first, second and third output connectors 114, 112, 113 of the device as shown in Fig. 9.

Fig. 9 shows the mixer 310 placed in the third position in which the first, second and third input connectors 321, 322, 323 are connected with the first, second and third output connectors 114, 112, 113. To reach the third position the mixer may be placed with the guiding structure to the device in the first position, rotated toward the second position and moved in the plugging direction toward the third position with guidance of the guiding structure.

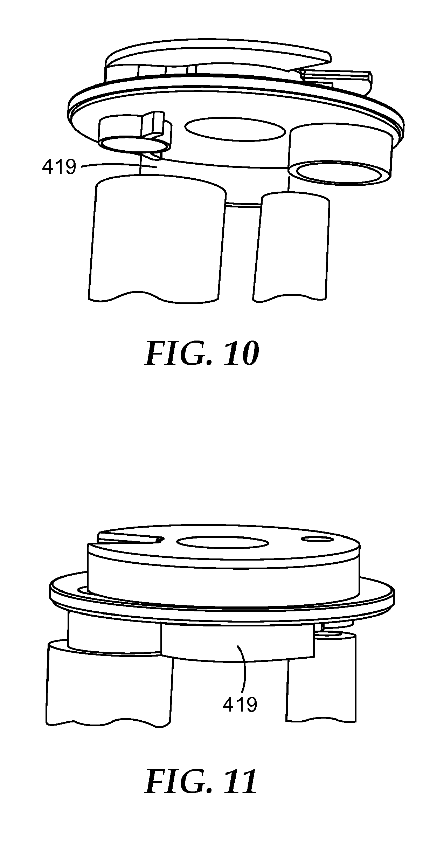

Figs. 10 and 11 illustrate a U shaped guiding structure 419 which only partially surrounds the input connectors of the mixer, but which is generally operable similar to the guiding structure shown in Figs 7-9.

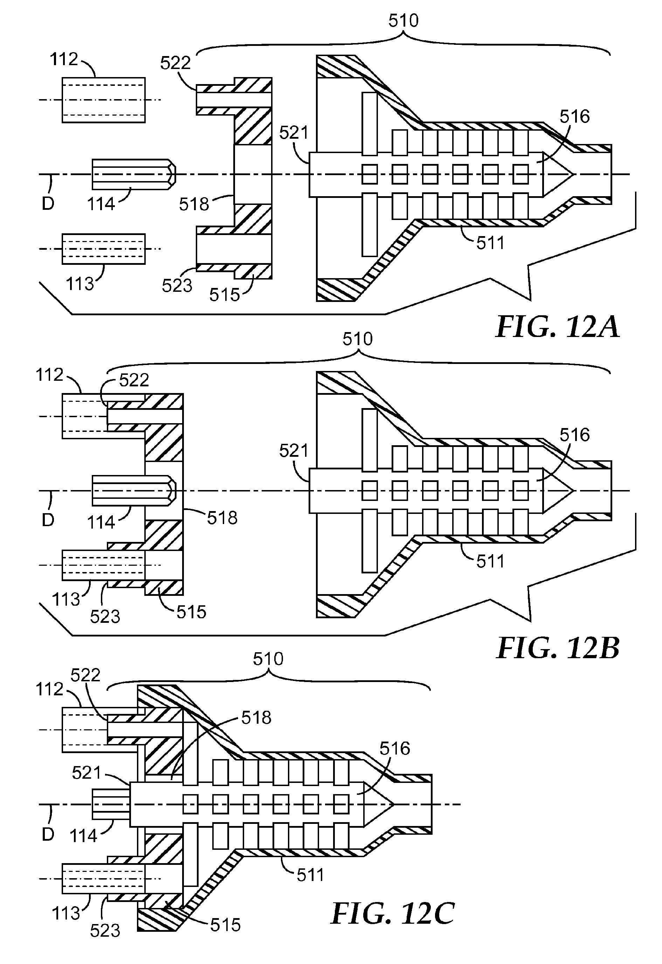

Figs. 12a, 12b, 12c show a mixer 510 which has a housing 511 and separate therefrom a closure plate 515. The closure plate 515 and the housing 511 are adapted for mating with one another. The mixer 510 further has a mixing rotor 516 having a first input connector 521. The closure plate has second and third input connectors 522, 523. The second and third input connectors 522, 523 further form passageways through the closure plate. A further passageway 518 through the closure plate 525 allows the first input connector 521 to be accessed through the closure plate 515 when the closure plate 515 and the housing 511 are mated. Further illustrated are first, second and third output connectors 114, 112, 113. The first, second and third input connectors 521, 522, 523 and the first, second and third output connectors 114, 112, 113 respectively are adapted for forming plug-and-socket connections with one another. This means that first input connectors 521 and the first output connector 114 are adapted for forming a plug-and-socket connection with one another, the second input connector 522 and the second output connector 112 are adapted for forming a plug-and-socket connection with one another, and the third input connector 523 and the third output connector 113 are adapted for forming a plug-and-socket connections with one another. A plugging direction in which the input and output connectors must be moved relative to one another for establishing the plug-and-socket connections is indicated by the axis D. The axis D in the example also corresponds to a longitudinal axis of the mixer 510.

Fig. 12a shows the output connectors 114, 112, 113 spaced from the closure plate 515, and the closure plate 515 spaced from the housing 511. In one step the closure plate 515 may be placed with the second and third input connectors 522, 523 onto the first and second output connectors 112, 113 as shown in Fig. 12b. In a further step (not illustrated) the first input connector 521 may be placed on the first output connector 114. This may be achieved by moving the housing with the mixing rotor toward the closure plate 515 which is already placed on the output connectors 112, 113.Thereby the housing with the mixing rotor may be rotated as required to mate the input connector 521 with the (in this example) hexagonal output connector 114. Such a mating may (due to the hexagonal shape of the output connector 114) only be enabled in certain (in the example six different) rotational positions of the mixing rotor relative the output connector. The dual alignment requirement may be separated by the example shown into two separate alignments which can be performed within two timely separated actions, namely by first assembling the closure plate to the output connectors and subsequently by assembling the housing and the mixing rotor to the closure plate. Fig. 12c illustrates the assembled mixer placed on the output connectors.

## Claims

1. A mixer for mixing components to form a dental material, comprising:
- a mixing rotor for mixing the components;
- first, second and third input connectors, each being adapted to form part of a plug-and-socket connection;
- the first input connector comprising an input drive coupling which enables driving of the mixing rotor;
- the second and third input connectors each comprising an inlet for at least one of the components into the mixer;
- the first, second and third input connectors each being adapted for plugging in a plugging direction to establish the plug-and-socket connection; and
- wherein the mixer further comprises a guiding structure which is adapted to provide a guiding of the mixer along the plugging direction for establishing at least one of the plug-and-socket connections.

2. The mixer of claim 1, wherein each of the first, second and third input connectors are oriented at the mixer for plugging in one common plugging direction.

3. The mixer of claim 1 or 2, wherein the second and third input connectors comprise a generally cylindrical plug or socket and wherein the first input connector comprises a plug or socket having an engagement structure which in a dimension generally parallel to the plugging direction extends with a non-circular cross-section.

4. The mixer of any of the preceding claims, wherein the guiding structure comprises a protrusion from the mixer.

5. The mixer of claim 4, wherein the protrusion comprises a generally U-shaped groove extending in a dimension generally parallel to the plugging direction.

6. The mixer of claim 5, wherein the U-shaped groove extends partially around one of the first, second, and third input connectors.

7. The mixer of claim 5 or 6, wherein the protrusion comprises three U-shaped grooves each partially extending around one of the first, second, and third input connectors.

8. The mixer of any of the claims 4 to 7, wherein the protrusion is formed at an end of at least one plug or socket structure of at least one of the first, second and third input connectors.

9. The mixer of any of the claims 4 to 8, wherein the protrusion is generally ring shaped.

10. The mixer of any of the preceding claims, wherein the protrusion extends over a first length and the first, second and third input connectors each extend over a second length, wherein the first length is greater than the second length.

11. The mixer of any of the preceding claims, wherein the first, second, and third input connectors and the guiding structure extend from a rear end of the mixer, and wherein the mixer has an outlet for the mixture at an opposite front end.

12. A system comprising the mixer according to any of the claims 1 to 11 and a device for dispensing a dental material, the device comprising:
- a motor driven drive shaft for driving the mixing rotor of the mixer, the drive shaft having a first output connector;
- at least one container for holding at least one component of the dental material
- a second output connector for the at least one container; and
- a plunger for extruding the component from the container.

13. The system of claim 12,having a third output connector, the first, second and third output connectors of the device being connected to the first, second and third input connectors of the mixer, respectively.

14. A method of placing a mixer for mixing components to form a dental material to a device for dispensing the dental material,
- the mixer having:
o first, second, and third input connectors; and
o a guiding structure;
- the device having:
o first, second, and third output connectors;
- the input and output connectors being adapted to establish a plug-and-socket connection through plugging of the input and output connectors to one another in a plugging direction;
- the method comprising the steps of:
o placing the mixer with the guiding structure on the device;
o moving the mixer in the plugging direction guided by the guiding structure with the plug-and-socket connection being not established; and
o further moving the mixer in the plugging direction and thereby establishing the plug-and-socket connection.

15. The method of claim 14, further comprising, in a subsequent manner, the steps of:
- aligning the first input connector with the first out connector, and
- aligning the second and third input connectors with the second and third output connectors respectively.
